(19) **Europäisches Patentamt**
**European Patent Office**
**Office européen des brevets**

(11) **EP 3 767 518 A1**

(12) **EUROPÄISCHE PATENTANMELDUNG**

(43) Veröffentlichungstag:
**20.01.2021 Patentblatt 2021/03**

(51) Int Cl.:
*G06K 7/10* (2006.01)   *G01S 1/08* (2006.01)

(21) Anmeldenummer: **19186194.7**

(22) Anmeldetag: **15.07.2019**

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**
Benannte Erstreckungsstaaten:
**BA ME**
Benannte Validierungsstaaten:
**KH MA MD TN**

(71) Anmelder: **SICK AG**
**79183 Waldkirch (DE)**

(72) Erfinder: **Hansen, Nils**
**21077 Hamburg (DE)**

(54) **RFID-VORRICHTUNG UND VERFAHREN ZUM KOMMUNIZIEREN MIT EINEM RFID-TRANSPONDER**

(57) Es wird eine RFID-Lesevorrichtung (10) mit mindestens einer Antenne (20) zum Kommunizieren mit einem RFID-Transponder (12) über ein RFID-Signal und mit einer Steuer- und Auswertungseinheit (22) angegeben, die dafür ausgebildet ist, eine RFID-Information in das RFID-Signal einzucodieren und/oder aus dem RFID-Signal auszulesen sowie mittels des RFID-Signals mit einem Phasenverfahren einen Abstand des RFID-Transponders (12) zu bestimmen. Dabei ist die Steuer- und Auswertungseinheit (22) weiterhin dafür ausgebildet, mehrere Kommunikationsvorgänge mit dem RFID-Transponder (12) bei jeweils verschiedenen Frequenzen (f1, f2, f3) durchzuführen, mit einer ersten feinen Abstandsmessung den Abstand noch mehrdeutig und mit einer zweiten groben Abstandsmessung eindeutig zu bestimmen und die Mehrdeutigkeit der ersten feinen Abstandsmessung mit der zweiten groben Abstandsmessung aufzulösen.

## Figur 1

EP 3 767 518 A1

**Beschreibung**

Die Erfindung betrifft eine RFID-Vorrichtung und ein Verfahren zum Kommunizieren zwischen einer RFID-Lesevorrichtung und einem RFID-Transponder nach dem Oberbegriff von Anspruch 1 beziehungsweise 13.

RFID-Lesesysteme dienen der Identifikation von Objekten und Waren und werden unter anderem eingesetzt, um logistische Bewegungen zu automatisieren. An einem Identifikationspunkt, vor allem bei einem Wechsel des Besitzers der Ware oder einem Wechsel des Transportmittels, werden an den Waren befestigte RFID-Transponder ausgelesen und gegebenenfalls Informationen in den Transponder zurückgeschrieben. Dies führt zu schnellen und nachvollziehbaren Logistikbewegungen. Die erfassten Informationen werden verwendet, um die Weiterleitung und Sortierung von Gütern und Produkten zu steuern. Wichtige Anwendungen für die automatische Identifikation sind logistische Verteilerzentren, etwa von Paketversendern, oder die Gepäckaufgabe in Flughäfen.

Ein häufiger Einsatzort eines RFID-Lesesystems ist die Montage an einem Förderband, auf dem die Waren gefördert werden, oder in einem sogenannten Leseportal. Darunter ist ein beliebiger Durchgang zu verstehen, welcher mit einem oder mehreren RFID-Lesern und möglicherweise weiteren Sensoren ausgestattet ist. Objekte werden mittels eines Förderbandes, eines Transportfahrzeugs, wie ein Gabelstapler, oder auch von Hand durch das Leseportal bewegt und dabei anhand ihres RFID-Transponders identifiziert.

Der RFID-Leser regt die Transponder zur Abstrahlung der gespeicherten Information an, wobei passive Transponder die notwendige Energie aus der Sendeenergie des Lesesystems beziehen. In dem etablierten Ultrahochfrequenzstandard (UHF) ISO 18000-6 werden passive Transponder nach dem Backscatter-Verfahren ausgelesen. Der Standard regelt die Kommunikation zwischen RFID-Leser und RFID-Transponder, stellt aber keine weitere Funktionalität bereit. Wünschenswert wäre jedoch die Möglichkeit einer Abstandsbestimmung zwischen RFID-Leser und RFID-Transponder. Damit können die RFID-Transponder einem bestimmten räumlichen Bereich zugeordnet werden, was die nachgelagerte Datenverarbeitung vereinfacht und verbessert.

Es gibt im Stand der Technik verschiedene Vorschläge für eine solche Abstandsmessung. Einige Ansätze basieren auf der Kombination mehrerer RFID-Leser oder zumindest mehrerer Antennen. Das erfordert also relativ komplexe Systeme. Eine einfache Möglichkeit ist die Auswertung des Pegels (RSSI, Received Signal Strength Indicator). Der Pegel ist aber nicht allein vom Abstand abhängig, so dass dies nur eine grobe Abstandsinformation ergibt. Vielversprechender ist eine Auswertung der Phase des RFID-Signals, wie dies grundsätzlich von Radar-Geräten bekannt ist. Dabei besteht allerdings das Problem, dass eine Phasenmessung den Abstand immer nur modulo der Periode der zugrundeliegenden Frequenz bestimmt, die Abstandsmessung also mehrdeutig ist. Die US 8 188 908 B3 offenbart eine Abstandsmessung zu einem RFID-Transponder, in der ein Signalpegel zusätzlich zu einer Phase herangezogen wird.

Eine besondere Ausprägung eines Phasenverfahrens zur Abstandsmessung ist ein Zweifrequenzverfahren (DFCW, Dual Frequency Continuous Wave). Dabei wird ein RFID-Transponder zweimal bei unterschiedlichen Frequenzen ausgelesen und jeweils die Phase bestimmt. Aus den Differenzen der Frequenzen und Phasen lässt sich dann der Abstand berechnen. Dabei wird die Abstandsmessung umso genauer, je größer die Differenz zwischen den Frequenzen ist. Zugleich verringert sich aber der Eindeutigkeitsbereich. Mit einem Zweifrequenzverfahren kann also entweder genau oder über eine größere Reichweite gemessen werden, aber nicht beides.

Dieses Problem wird besonders deutlich bei RFID-Lesern mit ETSI-Zulassung, die also die Norm EN302208 V3.1.1 (2016-11) der ETSI (European Telecommunications Standards Institute) erfüllen. In der Vergangenheit stand hier nur das sogenannte Lower Band mit einer Bandbreite von 3 MHz zur Verfügung. Das genügt nicht für eine akzeptable Genauigkeit der Abstandsmessung. In der genannten Version der Norm kommt ein Upper Band hinzu, und über die damit maximal auseinanderliegenden Bandgrenzen von 56 Mhz werden praxisrelevante Genauigkeitsanforderungen erfüllbar. Allerdings ist damit der Eindeutigkeitsbereich auf ungenügende höchsten 3 m begrenzt.

Bislang wird das Zweifrequenzverfahren nur im Zusammenhang mit FCC-Zulassungen angewandt (Federal Communications Commission). Dort steht ein breiteres Frequenzband zur Verfügung.

In der US 2014/0184447 A1 beziehungsweise der US 9 116 237 B2 wird ein Zweifrequenzverfahren mit einem einfachen Phasenverfahren (CW-Radar, Continuous Wave) kombiniert. Bei einem einfachen Phasenverfahren ist der Eindeutigkeitsbereich gleich der halben Freiraumwellenlänge der Trägerfrequenz, die bei RFID in der Größenordnung von 30 cm liegt. Die US 9 116 237 B2 verwendet nun das Zweifrequenzverfahren, um den Eindeutigkeitsbereich zu erweitern. Das geht aber natürlich nur so weit, wie das Zweifrequenzverfahren selbst einen größeren Eindeutigkeitsbereich vorweisen kann. Dazu müssen die beiden Frequenzen nahe beieinanderliegen, mit dem bereits bekannten Ergebnis, dass das Zweifrequenzverfahren selbst keine hohe Genauigkeit erreicht. Bei einer RFID-Anwendung mit ETSI-Zulassung müssen zudem die eingesetzten Frequenzen in dem Lower Band beziehungsweise Upper Band liegen. Es zeigt sich, dass unter diesen Bedingungen auch durch die Kombination von Zweifrequenzverfahren und einfachem Phasenverfahren keine hohe Genauigkeit erzielbar ist. Alternativ könnte der Abstand zwischen den beiden Frequenzen so hoch gewählt werden, wie es die Frequenzbänder nach ETSI gerade noch zulassen, wodurch dann aber der Eindeutigkeitsbereich auf 3 m schrumpft.

Aus der Veröffentlichung von Xin Li et al. "Multifrequency-based range estimation of RFID tags", 2009 IEEE International Conference on RFID, IEEE, 2009 ist bekannt, dass der Eindeutigkeitsbereich in einem Multifrequenzverfahren mit drei Frequenzen über den Chinesischen Restsatz in Abhängigkeit der Verhältnisse der drei gewählten Frequenzen vergrößert werden kann. Allerdings betrifft diese Erweiterung Abstände, die jenseits des jeweiligen Eindeutigkeitsbereichs der Einzelmessungen und damit für Anwendungen mit ETSI-Zulassung jenseits der maximalen Lesereichweite liegen. Außerdem ist mit den nach ETSI zulässigen Frequenzen keine hinreichende Genauigkeit erreichbar. Bei Anwendungen mit FCC-Zulassung steht ein durchgehender Frequenzbereich zur Verfügung, in dem die einzelnen Messfrequenzen relativ frei wählbar sind. Damit kann die Messgenauigkeit der Phasenmessung des RFID-Lesers abgestimmt werden. Bei Anwendungen mit ETSI-Zulassungen dagegen gibt es kein durchgehendes Frequenzband, weshalb die Wahl der Messfrequenzen beschränkt ist. Hinzu kommt, dass die resultierenden Verhältnisse der möglichen Differenzfrequenzen mehrere Größenordnungen auseinanderliegen. Hierdurch wird eine hohe Messgenauigkeit an die Phasenmessungen gefordert, damit mit dem Chinesischen Restwertsatz akzeptable Entfernungsmessungen erreicht werden. Mit heutigen RFID-Lesern ist diese Messgenauigkeit nicht erreichbar. Aus diesen Gründen ist ein Anwenden des chinesischen Restwertsatz in RFID-Anwendungen mit ETSI-Zulassungen nicht sinnvoll möglich.

Die US 8 493 182 B2 befasst sich ebenfalls mit der phasenbasierten Abstandsmessung. Dabei werden gemessene und theoretische Phasen verglichen. Die Anwendung ist aber erneut auf Abstände in einem Eindeutigkeitsbereich beschränkt, der unter den Bedingungen der ETSI-Norm zu klein ist.

Es ist daher Aufgabe der Erfindung, die Abstandsmessung mit einem RFID-Leser zu verbessern.

Diese Aufgabe wird durch eine RFID-Vorrichtung und ein Verfahren zum Kommunizieren zwischen einer RFID-Lesevorrichtung und einem RFID-Transponder nach Anspruch 1 beziehungsweise 13 gelöst. Die RFID-Lesevorrichtung sendet und empfängt RFID-Signale über eine Antenne, wobei das RFID-Signal eine auf eine Trägerfrequenz modulierte RFID-Information enthält. Die Kommunikation folgt den Regeln eines RFID-Protokolls, wie es beispielsweise in der einleitend genannten ISO 18000-6 festgelegt ist. Ein solches RFID-Protokoll erfordert üblicherweise auch schon für reine Lesevorgänge eine bidirektionale Kommunikation, weshalb dann die RFID-Lesevorrichtung auch ein RFID-Signal an den RFID-Transponder sendet und nicht nur RFID-Signale empfängt. Zudem wird über die Antenne Energie an passive RFID-Transponder übertragen. Eine RFID-Lesevorrichtung kann vorzugsweise trotz ihres Namens auch Daten auf dem RFID-Transponder ablegen oder verändern.

Eine Steuer- und Auswertungseinheit ist dafür ausgebildet, RFID-Informationen in ein RFID-Signal einzucodieren beziehungsweise darauf auszulesen. Zugleich ist sie in der Lage, den Abstand des RFID-Transponders von der RFID-Lesevorrichtung mit einem Phasenverfahren zu bestimmen. Für die Abstandsmessung wird also die Trägerfrequenz verwendet, die Abstandsmessung ist eine zweite Auswertung neben dem Modulieren und Demodulieren einer RFID-Information.

Die Erfindung geht von dem Grundgedanken aus, mehrfach bei verschiedenen Frequenzen zu kommunizieren. Der Kommunikations- oder Lesevorgang wird also mindestens einmal wiederholt und dabei die Trägerfrequenz beziehungsweise der Kanal gewechselt.

Dadurch wird auch die Phasenmessung wiederholt, und die mehrfach bei unterschiedlichen Frequenzen gemessenen Phasen werden dazu genutzt, die Anforderungen einer genauen Abstandsmessung und eines großen Eindeutigkeitsbereichs miteinander zu vereinbaren. Dazu werden zwei Abstandsmessungen durchgeführt. Dabei bedeutet Abstandsmessung vorzugsweise nicht, dass eigens gemessen wird, vielmehr handelt es sich um eine Auswertung der mehreren Kommunikationsvorgänge beziehungsweise der dabei gemessenen Phasen, die auch als Abstandsbestimmung statt Abstandsmessung bezeichnet werden könnte.

Eine erste feine Abstandsmessung sorgt für die erforderliche Genauigkeit oder Messauflösung. Die erste feine Abstandsmessung hat aber einen kleinen Eindeutigkeitsbereich, ist also innerhalb der relevanten Leseentfernung oder spezifizierten Reichweite der RFID-Lesevorrichtung noch mehrdeutig. Die dadurch entstehenden Abstandsbereiche, in denen jeweils aufgrund der Mehrdeutigkeit gleiche Abstände gemessen werden, sind hier als Sektoren bezeichnet. Es gibt folglich aus der ersten feinen Abstandsmessung noch mehrere mögliche Abstandswerte.

Eine zweite grobe Abstandsmessung hat einen ausreichenden Eindeutigkeitsbereich, der damit bestimmte Abstandswert ist folglich innerhalb der spezifizierten Reichweite eindeutig. Die Genauigkeit oder Auflösung dieses Abstandswerts wäre unzureichend. Das ist aber nicht von Belang, weil dieser Abstandswert nur dazu dient, die Mehrdeutigkeit der ersten feinen Abstandsmessung aufzulösen. Mit anderen Worten wird anhand der zweiten groben Abstandsmessung nur der richtige Sektor gefunden. Innerhalb des Sektors bestimmt die erste feine Abstandsmessung den Abstand. Es sei noch angemerkt, dass erste und zweite Abstandsmessung nur Namen zu deren Unterscheidung sind und keine Reihenfolge implizieren. Die zweite grobe Abstandsmessung kann also auch zuerst ausgeführt werden.

Die Erfindung hat den Vorteil, dass eine eindeutige Abstandsmessung mit hoher Genauigkeit über eine große Reichweite ermöglicht wird. Somit kann ein RFID-Transponder nicht nur ausgelesen und identifiziert, sondern auch lokalisiert werden. Das ist auch mit nur einer einzigen RFID-Lesevorrichtung mit nur einer einzigen Antenne möglich. Im Gegensatz zu den einleitend diskutierten herkömmlichen Ansätzen funktioniert die Kombination aus hoher Messgenauigkeit und großem Eindeutigkeitsbereich auch unter den Randbedingungen der Frequenzbänder der ETSI-Norm. Außerdem ist nur ein sehr geringer Rechenaufwand erforderlich.

Die Steuer- und Auswertungseinheit ist bevorzugt dafür ausgebildet, mit der zweiten groben Abstandsmessung ein als Sektor bezeichnetes Abstandsintervall für den Abstand des RFID-Transponders aufzufinden. Mit der ersten feinen Abstandsmessung ist der Abstand wegen deren unzureichendem Eindeutigkeitsbereich nur bis auf ein m-faches, m=0, 1, 2, ..., von $2\pi\lambda$ bekannt, wobei $\lambda$ die Trägerfrequenz oder eine daraus abgeleitete Frequenz ist, beispielsweise eine Differenzfrequenz. Jedem dieser Werte von m ist einer der Sektoren zugeordnet. Die Sektoren teilen sich also die Reichweite mit aufsteigendem m untereinander auf. Das ist die Mehrdeutigkeit, die durch die zweite grobe Abstandsmessung aufgelöst wird. Für jedes m gibt es Abstandsgrenzwerte des zugehörigen Sektors, und deshalb kann dem mit der zweiten groben Abstandsmessung gefundene Abstandswert anhand dieser Abstandsgrenzwerte eindeutig und einfach ein Sektor zugeordnet werden. Weiterhin ist es dann sehr einfach, anhand des m eindeutig den richtigen Abstandswert der ersten feinen Abstandsmessung aufzufinden. Im Übrigen ist das alles nur eine mögliche sprachliche Beschreibung der Auflösung der Mehrdeutigkeit, es gibt viele andere mathematische Wege, die zum selben Ergebnis führen und die mit umfasst sind. Beispielsweise kann ebenso der Abstandswert aus der ersten feinen Abstandsmessung um ein m entsprechendes Offset korrigiert werden.

Die Steuer- und Auswertungseinheit ist bevorzugt dafür ausgebildet, für die Kommunikationsvorgänge zur Bestimmung eines Abstands eine erste Frequenz f1, eine zweite Frequenz f2 und eine dritten Frequenz f3 zu verwenden. Ein RFID-Transponder wird also dreimal ausgelesen und dabei jeweils eine der genannten Frequenzen f1, f2, f3 verwendet. Vorzugsweise werden dabei drei Phasen $\varphi 1$, $\varphi 2$, $\varphi 3$ bestimmt. Auf diesen Größen basieren dann die erste feine Abstandsmessung und die zweite grobe Abstandsmessung. An dieser Stelle sind mit drei Frequenzen nicht mindestens, sondern genau drei Frequenzen gemeint. Es ist denkbar, weitere Kommunikationsvorgänge bei noch mehr Frequenzen durchzuführen, oder einen Kommunikationsvorgang bei einer der Frequenzen zu wiederholen. Das verspricht aber keine dem Zusatzaufwand angemessenen Vorteile.

Die Steuer- und Auswertungseinheit ist bevorzugt dafür ausgebildet, die erste feine Abstandsmessung und/oder die zweite grobe Abstandsmessung mit einem Zweifrequenzverfahren auszuwerten. Das Zweifrequenzverfahren hat Vorteile gegenüber einem einfachen Phasenverfahren (CW-Radar), etwa einen größeren Eindeutigkeitsbereich, und es bietet zugleich die Möglichkeit, in den Frequenzbändern nach der ETSI-Norm eine ausreichende Genauigkeit zu erzielen. In dem Zweifrequenzverfahren wird insbesondere der jeweilige Abstandswert mit einem Quotienten aus einer Differenzphase $\varphi i - \varphi j$ und einer Differenzfrequenz $f i - f j$, i,j=1..3 aus zwei der Kommunikationsvorgänge bestimmt. Hinzu kommen noch Konstanten, unter anderem die Lichtgeschwindigkeit. Die Differenzphase ist nur bis auf eine Periode bekannt, die bei der ersten feinen Abstandsmessung durch den Sektor m bestimmt wird und bei der zweiten groben Abstandsmessung einem Abstand größer ist als die relevante Reichweite entspricht.

Die Steuer- und Auswertungseinheit ist bevorzugt dafür ausgebildet, für die mehreren Kommunikationsvorgänge Frequenzen aus einem ersten Frequenzband und einem zweiten Frequenzband zu verwenden, wobei die Frequenzbänder einen gegenseitigen Frequenzabstand aufweisen. Damit kann die Erfindung auch für die Abstandsmessung ungünstigen Randbedingungen für die Wahl der Frequenzen nachkommen. Die beiden Frequenzbänder, von denen das mit den niedrigeren Frequenzen als unteres Band (Lower Band) und das mit den höheren Frequenzen als oberes Band (Upper Band) bezeichnet wird, sind voneinander durch ein weiteres Frequenzband getrennt, aus dem die für die Kommunikationsvorgänge verwendeten Frequenzen nicht gewählt werden können. Innerhalb des jeweiligen Frequenzbandes können erneut nur bestimmte Teilbereiche oder Kanäle freigegeben sein.

Das erste Frequenzband ist vorzugsweise das Frequenzband von 865-868 MHz und das zweite Frequenzband das Frequenzband von 915-921 MHz. Das sind die zulässigen Frequenzbereiche im Lower Band und Upper Band nach der einleitend zitierten ETSI-Norm. Innerhalb der Bänder sind wiederum Kanäle definiert, und die beiden Frequenzen werden bevorzugt entsprechend jeweils einem der Kanäle gewählt. Besonders bevorzugt werden als zwei der Frequenzen diejenigen mit maximal möglichem Frequenzabstand gewählt. Das wäre konkret nach der besagten ETSI-Norm der Kanal vier im Lower Band und der Kanal 12 im Upper Band bei einer Differenzfrequenz von 54,2 MHz. Das ergibt in einem Zweifrequenzverfahren die maximale Genauigkeit, jedoch bei kleinem Eindeutigkeitsbereich von 2,7 m.

Die Steuer- und Auswertungseinheit ist bevorzugt dafür ausgebildet, für die Bestimmung eines Abstands einen ersten Kommunikationsvorgang mit einer ersten Frequenz aus dem einen Frequenzband und einen zweiten Kommunikationsvorgang mit einer zweiten Frequenz aus dem anderen Frequenzband durchzuführen. Durch die Auswahl von Frequenzen aus den beiden unterschiedlichen Frequenzbändern wird eine relativ große Differenzfrequenz erreicht. Der maximal mögliche Fall wurde bereits im Vorabsatz angesprochen. Im Folgenden wird ohne Beschränkung der Allgemeinheit angenommen, dass die erste Frequenz f1 aus dem unteren Band und die zweite Frequenz f2 aus dem oberen Band gewählt ist.

Die Steuer- und Auswertungseinheit ist bevorzugt dafür ausgebildet, für die Bestimmung eines Abstands einen dritten Kommunikationsvorgang mit einer dritten Frequenz f3 aus dem ersten Frequenzband oder dem zweiten Frequenzband durchzuführen. Das entspricht insgesamt wieder der weiter oben bereits diskutierte Ausführungsform, in der ein RFID-Transponder dreimal ausgelesen und dabei jeweils eine der genannten Frequenzen f1, f2, f3 verwendet wird, vorzugsweise mit Bestimmung der drei Phasen φ1, φ2, φ3. Hier ist nun konkretisiert, dass die beiden Frequenzen f1, f2 aus unterschiedlichen Bändern stammen und die dritte Frequenz f3 entweder wie die erste Frequenz f1 aus dem unteren Band oder wie die zweite Frequenz aus dem oberen Band.

Die Steuer- und Auswertungseinheit ist bevorzugt dafür ausgebildet, die erste feine Abstandsmessung mit einem Zweifrequenzverfahren aus dem Kommunikationsvorgang mit der ersten Frequenz f1 und dem Kommunikationsvorgang mit der zweiten Frequenz f2 und die zweite grobe Abstandsmessung mit einem Zweifrequenzverfahren aus dem Kommunikationsvorgang mit der dritten Frequenz f3 und dem Kommunikationsvorgang mit der ersten Frequenz f1 oder der zweiten Frequenz f2 auszuwerten. Die erste feine Abstandsmessung basiert somit auf den Frequenzen f1, f2 und deren durch den Abstand zwischen unterem Band und oberem Band großen Differenzfrequenz f1-f2. Die grobe zweite Abstandsmessung nutzt ein anderes Paar von Frequenzen, an dem die dritte Frequenz f3 beteiligt ist.

Die Steuer- und Auswertungseinheit ist bevorzugt dafür ausgebildet, für das Zweifrequenzverfahren der zweiten groben Abstandsmessung die erste Frequenz f1 heranzuziehen, wenn die dritte Frequenz f3 im ersten Frequenzband liegt, und die zweite Frequenz f2 heranzuziehen, wenn die dritte Frequenz f3 im zweiten Frequenzband liegt. Damit wird nun genauer festgelegt, welches Paar von Frequenzen, an denen die dritte Frequenz f3 beteiligt ist, die zweite grobe Abstandsmessung nutzt. Liegt die dritte Frequenz f3 im unteren Band, so wird die erste Frequenz f1 gewählt, also ein Zweifrequenzverfahren mit der ersten Frequenz f1 und der dritten Frequenz f3 sowie der Differenzfrequenz f3-f1 durchgeführt. Liegt entsprechend die dritte Frequenz f3 im oberen Band, so wird die zweite Frequenz f2 gewählt und damit ein Zweifrequenzverfahren mit der zweiten Frequenz f2 und der dritten Frequenz f3 sowie der Differenzfrequenz f3-f2 durchgeführt. Mit anderen Worten wird diejenige der beiden ersten Frequenzen f1, f2 gewählt, mit der sich die kleinere Differenzfrequenz ergibt, denn das führt zu einem größeren Eindeutigkeitsbereich.

Die Steuer- und Auswertungseinheit ist bevorzugt dafür ausgebildet, den Abstand auch aus einem Pegel des RFID-Signals zu schätzen und diese Abstandsschätzung ergänzend zu verwenden, um die Mehrdeutigkeit der ersten feinen Abstandsmessung aufzulösen. Eine Messung des Pegels des RFID-Signals (RSSI, Received Signal Strength Indicator) erlaubt auch eine zumindest grobe Abstandsmessung. Das allein wäre wegen der großen Messfehler nicht ausreichend, die Mehrdeutigkeit der ersten feinen Abstandsmessung aufzulösen. Trotz der Messfehler ist aber sehr wohl möglich, die Auflösung der Mehrdeutigkeit mittels der zweiten groben Abstandsmessung anhand des Pegels zu plausibilisieren. Eine kombinierte Auswertung der zweiten groben Abstandsmessung und des Pegels erlaubt insgesamt eine besonders zuverlässige Sektorenbestimmung.

Die RFID-Lesevorrichtung ist bevorzugt für eine Kommunikationsreichweite von mindestens fünf Metern oder mindestens zehn Metern ausgebildet. Eine derartige Reichweite wird in aktuellen UHF-RFID-Anwendungen erreicht und gefordert. Deshalb genügt auch der 2,7 m große Eindeutigkeitsbereich nicht, der mit der ersten feinen Abstandsmessung innerhalb der durch die ETSI-Norm vorgegebenen Frequenzbänder höchstens möglich ist. Durch die erfindungsgemäße Kombination und Auflösung der Mehrdeutigkeit mit der zweiten groben Abstandsmessung wird der Eindeutigkeitsbereich über die 2,7 m und Reichweiten von 5 m, 10 m und mehr hinaus vergrößert.

Das erfindungsgemäße Verfahren kann auf ähnliche Weise weitergebildet werden und zeigt dabei ähnliche Vorteile. Derartige vorteilhafte Merkmale sind beispielhaft, aber nicht abschließend in den sich an die unabhängigen Ansprüche anschließenden Unteransprüchen beschrieben.

Die Erfindung wird nachstehend auch hinsichtlich weiterer Merkmale und Vorteile beispielhaft anhand von Ausführungsformen und unter Bezug auf die beigefügte Zeichnung näher erläutert. Die Abbildungen der Zeichnung zeigen in:

Fig. 1    eine schematische Darstellung einer RFID-Lesevorrichtung;

Fig. 2    eine Darstellung der nach ETSI für UHF-RFID-Anwendungen zulässigen Frequenzbänder und Kanäle;

Fig. 3    eine Darstellung des mit einem Zweifrequenzverfahren fein gemessenen Abstands eines RFID-Transponders in Abhängigkeit vom tatsächlichen Abstand bei innerhalb der Frequenzbänder gemäß Figur 2 größtmöglichem Frequenzabstand der beiden Frequenz;

Fig. 4    eine Darstellung ähnlich Figur 3, nun jedoch grob mit einem kleinen Frequenzabstand der beiden Frequenzen gemessen;

Fig. 5    eine Darstellung ähnlich Figur 3, nun jedoch nach Kombination der feinen und groben Messung; und

Fig. 6    ein Ablaufschema für eine kombinierte feine und grobe Abstandsmessung, die auf drei Frequenzen basiert.

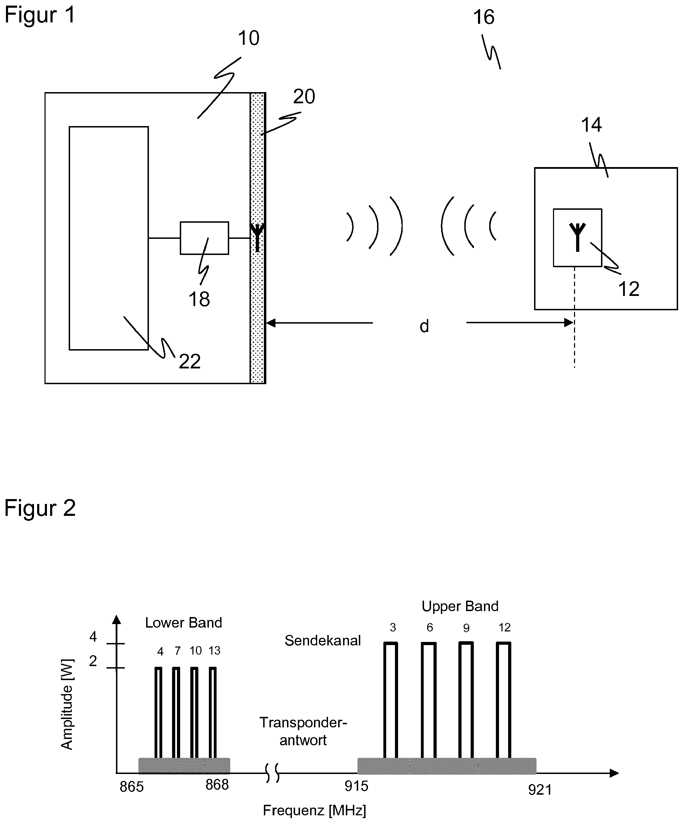

Figur 1 zeigt eine schematische Darstellung des Aufbaus einer RFID-Lesevorrichtung 10. Die RFID-Lesevorrichtung 10 kommuniziert mit einem RFID-Transponder 12, der üblicherweise an einem Objekt 14 angebracht ist und sich in einem Lesefeld 16 der RFID-Lesevorrichtung 10 befindet. Dazu tauscht ein RFID-Transceiver 18 über eine Antenne 20, beispielsweise eine Patchantenne, RFID-Signale mit dem RFID-Transponder 12 aus. Dabei ist der Begriff Transceiver rein funktional zu verstehen, die Auftrennung in separate Sender und Empfänger wäre auch denkbar.

Der RFID-Transceiver 18 ist mit einer Steuer- und Auswertungseinheit 22 verbunden, welche die empfangenen RFID-Signale auswertet oder Informationen als RFID-Signale an den RFID-Transponder 12 sendet. Das über die Antenne 20 abgestrahlte Trägersignal wird bei passivem RFID-Transponder 12 auch zu dessen Versorgung genutzt. Die RFID-Kommunikation ist an sich bekannt und folgt beispielsweise dem einleitend schon genannten Ultrahochfrequenzstandard ISO 18000-6. Deshalb wird auf die RFID-Kommunikation und den Aufbau der RFID-Lesevorrichtung 10 nicht genauer und auf den internen Aufbau des RFID-Transponders 12, der beispielsweise ebenfalls über eine Antenne verfügt, gar nicht weiter eingegangen.

Die RFID-Lesevorrichtung 10 ist nicht nur in der Lage, mit einem RFID-Transponder 12 zu kommunizieren, sondern auch dessen Abstand d von der RFID-Lesevorrichtung zu bestimmen. Das entsprechende Abstandsmessverfahren ist ebenfalls in der Steuer- und Auswertungseinheit 22 implementiert. Dabei ist vorstellbar, dass die Steuer- und Auswertungseinheit 22 anders als in Figur 1 dargestellt mehrere Funktionsblöcke oder sogar Hardwarebausteine aufweist, beispielsweise einen Baustein für die RFID-Kommunikation, einen Baustein für die Abstandsmessung und Lokalisierung sowie einen Baustein für die Kommunikation mit einer Datenbank beziehungsweise einem übergeordneten System.

Die Abstandsmessung beruht vorzugsweise auf einem Zweifrequenzverfahren (DFCW, Dual Frequency Continuous Wave Radar). Dessen Prinzip kann mit den nachfolgenden mathematischen Zusammenhängen beschrieben werden. Es erfolgen zwei Messungen, oder im Falle der RFID-Lesevorrichtung 10 vorzugsweise zwei Kommunikationsvorgänge, bei einer jeweiligen Frequenz f1 beziehungsweise f2. Aus den beiden Messungen wird jeweils eine Phase $\varphi 1$, $\varphi 2$ bezüglich der zugehörigen Trägerfrequenz f1, f2 bestimmt. Die gemessene Entfernung d berechnet sich dann zu

$$d = \frac{c * (\varphi 2 - \varphi 1)}{4\pi * (f2 - f1)}.$$

Dabei ist c die Lichtgeschwindigkeit. Für allgemeine Frequenzen fi, fj und zugehörige Phasen $\varphi i$, $\varphi j$ ist entsprechend

$$d = \frac{c * \Delta\varphi_{ij}}{4\pi * \Delta f ij},$$

mit den Definitionen einer Differenzfrequenz $\Delta\varphi_{ij} := fi - fj$ und einer Differenzphase $\Delta\varphi_{ij} := (\varphi i - \varphi i) + 2\pi m$; $m \in \mathbb{Z}$.

Die Differenzphase hat also einen eindeutig bestimmbaren Anteil $\varphi i - \varphi i$ und eine Mehrdeutigkeit in Vielfachen m von ganzen Perioden $2\pi$. Der Eindeutigkeitsbereich der Abstandsmessung ist begrenzt auf

$$d_{max} = \frac{c}{2 * |f_i - f_j|}.$$

Abstandsmessungen über einen größeren Entfernungsbereich als den Eindeutigkeitsbereich liefern demnach mit dem Zweifrequenzverfahren allein keine eindeutigen Abstandswerte mehr. Um ferner eine hohe Genauigkeit zu erreichen, wird entsprechend der Formel für d eine große Differenzfrequenz benötigt, die aber nach der Formel für $d_{max}$ zugleich einen kleinen Eindeutigkeitsbereich erzwingt.

Für eine RFID-Lesevorrichtung 10 mit ETSI-Zulassung ist die Wahl der Frequenzen fi, fj zudem noch durch starke Randbedingungen eingeschränkt. Die nachfolgenden Überlegungen beziehen sich speziell auf die von der ETSI in der Norm EN302208 V3.1.1 (2016-11) zu gelassenen Frequenzbänder. Es ist aber im Grunde nirgends auf der Welt zugelassen, einfach beliebige Frequenzbereiche zu verwenden, so dass sich die Überlegungen auf andere durch Normen oder sonstige Einschränkungen festgelegte Frequenzbänder übertragen lassen.

Figur 2 illustriert das nach der genannte ETSI-Norm zugängliche Frequenzspektrum. Es gibt zwei separate Frequenzbänder, die als unteres Band (Lower Band) mit Frequenzbereich 865-868 MHz und oberes Band (Upper Band) mit Frequenzbereich 915-921 MHz bezeichnet werden. Zudem stehen innerhalb der beiden Bändern jeweils nur vier Sendekanäle zur Verfügung. Dadurch ist die Wahl der Frequenzen fi, fj stark begrenzt.

Das ist auch der einleitend diskutierte Grund, dass viele herkömmliche Verfahren wie ein reines Zweifrequenzverfahren, eine Kombination eines Zweifrequenzverfahrens mit einem einfachen Phasenverfahren oder ein Mehrfrequenzverfahren unter Verwendung des Chinesischen Restsatzes nicht zum gewünschten Ziel einer über die gesamte Reichweite von beispielsweise zehn Metern genauen Abstandsmessung führen.

Die größtmögliche Differenzfrequenz wird erreicht, wenn die erste Frequenz f1 in Kanal vier im unteren Band und die zweite Frequenz f2 in Kanal zwölf im oberen Band gewählt wird. Bei dieser Wahl wird die beste Genauigkeit der Abstandsmessung erzielt. Dann beträgt die Differenzfrequenz f2-f1 = 54,2 MHz, und mit der oben angegebenen Formel ist der zugehörige Eindeutigkeitsbereich $d_{max}$= 2,7 m, der die erforderliche Reichweite von zumindest 5 m oder gar 10 m und mehr nicht abdeckt. Bei Verwendung von Kanal dreizehn im unteren Band und Kanal drei im oberen Band ist ein etwas größerer maximaler Eindeutigkeitsbereich von 3 m möglich, wobei aber entsprechend auch die Messgenauigkeit etwas herabgesetzt ist.

Erfindungsgemäß ist daher vorgesehen, zwei Abstandsmessungen durchzuführen, nämlich eine erste feine Abstandsmessung, welche die erforderliche Genauigkeit erreicht, jedoch noch einen zu kleinen Eindeutigkeitsbereich aufweist, und eine zweite grobe Abstandsmessung, deren mit relativ großem Messfehler behafteter Abstandswert lediglich dafür verwendet wird, die Mehrdeutigkeit der ersten feinen Abstandsmessung aufzulösen.

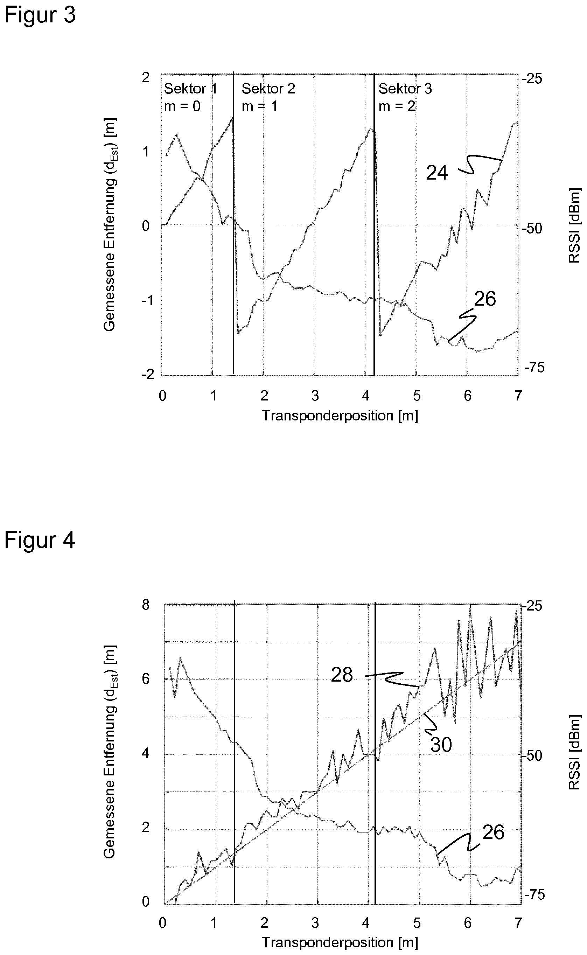

Figur 3 zeigt beispielhaft das Ergebnis einer ersten feinen Abstandsmessung mit einem Zweifrequenzverfahren. Dargestellt ist die gemessene Entfernung in Abhängigkeit von der Transponderposition, also dem tatsächlichen Abstand. Die Messkurve 24 ist das Ergebnis der ersten feinen Abstandsmessung. Zusätzlich ist zum Vergleich noch ein Pegelverlauf 26 eingezeichnet, auf den sich die rechte Y-Achsenbeschriftung RSSI bezieht.

Die erste feine Abstandsmessung wurde hier nach zwei Kommunikationsvorgängen zwischen RFID-Lesevorrichtung 10 und RFID-Transponder 12 bei den Frequenzen f1 und f2 im maximal möglichen Frequenzabstand gemäß ETSI-Norm vorgenommen, d.h. mit f1 in Kanal vier des unteren Bandes und f2 in Kanal zwölf des oberen Bandes. Dadurch wird die bestmögliche Genauigkeit erzielt. Es ist natürlich auch denkbar, einen engeren Frequenzabstand zu wählen, aber zumindest sollte vorzugsweise die eine Frequenz f1 in dem unteren Band bei Kanal vier, sieben, zehn oder dreizehn und die andere Frequenz f2 in dem oberen Band bei Kanal drei, sechs, neun oder zwölf gewählt werden, um die Genauigkeit nicht zu sehr zu beeinträchtigen. Selbstverständlich können die Frequenzen f1 und f2 ihre Rollen tauschen, die Zuordnung der Frequenz f1 zum unteren Band und der Frequenz f2 zum oberen Band erfolgt ohne Beschränkung der Allgemeinheit.

Mittels der jeweils empfangenen RFID-Signale werden die zu den Frequenzen f1, f2 gehörigen Phasen φ1, φ2 ermittelt. Daraus wird mit der oben angegebenen Gleichung für d ein Abstandswert berechnet. Das Ergebnis über Transponderpositionen oder tatsächliche Abstände zwischen 0 m und 7 m ist die in Figur 3 gezeigte Messkurve 24.

Die Mehrdeutigkeit der Messung ist offensichtlich. Der gemessene Abstandswert stimmt nur innerhalb eines Eindeutigkeitsbereichs, der sich bei dem maximal innerhalb der ETSI-Norm möglichen Frequenzabstand zwischen f1 und f2 über 2,7 m erstreckt. Die Messkurve 24 wiederholt sich dann in sägezahnartigen Perioden. Diese Perioden werden als Sektoren bezeichnet. Der dargestellte Entfernungsbereich von insgesamt 7 m lässt sich in drei Sektoren m=0, 1, 2 unterteilen. Für eine größere Lesereichweite würden entsprechend des Eindeutigkeitsbereiches weitere Sektoren hinzukommen.

Figur 4 zeigt beispielhaft das Ergebnis einer zweiten groben Abstandsmessung, die dafür genutzt wird, in der ersten feinen Abstandsmessung gemäß Figur 3 die Mehrdeutigkeit aufzulösen, also den richtigen Sektor m=0, 1, 2 zu bestimmen. Wiederum ist die gemessene Entfernung in Abhängigkeit von der Transponderposition beziehungsweise dem tatsächlichen Abstand dargestellt. Die Messkurve 28 ist das Ergebnis der zweiten groben Abstandsmessung. Zum Vergleich ist auch noch die Gerade 30 der hypothetisch exakt gemessenen Abstände eingezeichnet. Figur 4 enthält auch den Pegelverlauf 26

Für die zweite grobe Abstandsmessung wird ebenfalls vorzugsweise ein Zweifrequenzverfahren eingesetzt. Dabei werden nun zwei Frequenzen mit kleinerer Differenzfrequenz gewählt. Um nicht zwei zusätzliche Kommunikationsvorgänge zu benötigen, wird eine der Frequenzen f1 oder f2 nochmals einbezogen. Es erfolgt nur ein weiterer Kommunikationsvorgang bei einer dritten Frequenz f3, zu dem auch die zugehörige Phase φ3 bestimmt wird. Die dritte Frequenz f3 kann entweder im unteren Band oder im oberen Band gewählt werden. Ihr wird diejenige der Frequenzen f1 oder f2 zugeordnet, zu der die kleinere Differenzfrequenz besteht. Demnach basiert die zweite grobe Abstandsmessung auf f1 und f3, wenn die dritte Frequenz f3 im unteren Band liegt, und auf f2 und f3, wenn die dritte Frequenz f3 im oberen Band liegt.

Dementsprechend bestimmt eine gegenüber der ersten feinen Abstandsmessung deutlich kleinere Differenzfrequenz f3-f1 oder f3-f2 die Genauigkeit und den Eindeutigkeitsbereich: Die zweite Messung hat erheblich größere Messfehler, wie auch in Figur 4 klar erkennbar, ist aber dafür über den gesamten gezeigten Lesebereich von 7 m und auch bei geeigneter Wahl von f3 über einen noch größeren Lesebereich von 10 m und mehr eindeutig. Damit ist gemeint, dass es keine Sektoren gibt. Eineindeutig ist das Verhalten nicht, was aber an den Messfehlern liegt und nicht wie bei der ersten feinen Abstandsmessung an der systematischen Mehrdeutigkeit.

Der ausreichend große Eindeutigkeitsbereich ist die geforderte Eigenschaft der zweiten groben Abstandsmessung, denn damit kann nun der richtige Sektor m=0, 1, 2 für die erste feine Abstandsmessung bestimmt werden. Die größeren Messfehler der zweiten groben Abstandsmessung spielen praktisch keine Rolle, denn der in der Kombination verwendete Abstandswert wird allein durch die Messfehler der ersten feinen Abstandsmessung bestimmt. Verbleibende Unsicherheiten bei der Bestimmung eines Sektors m=0, 1, 2 wegen der Messfehler können optional behoben werden, indem ergänzend der Pegelverlauf 26 herangezogen wird. Der Pegelverlauf 26 allein ist kein gutes Maß für den Abstand und auch kein ausreichendes Kriterium für den richtigen Sektor m=0, 1, 2. Eine kombinierte Sektorenauswahl anhand der zweiten groben Abstandsmessung und des Pegelverlaufs 26 beziehungsweise eine Plausibilisierung anhand des Pegelverlaufs 26 führt jedoch zu einer sehr robusten und zuverlässigen Bestimmung des Sektors m=0, 1, 2.

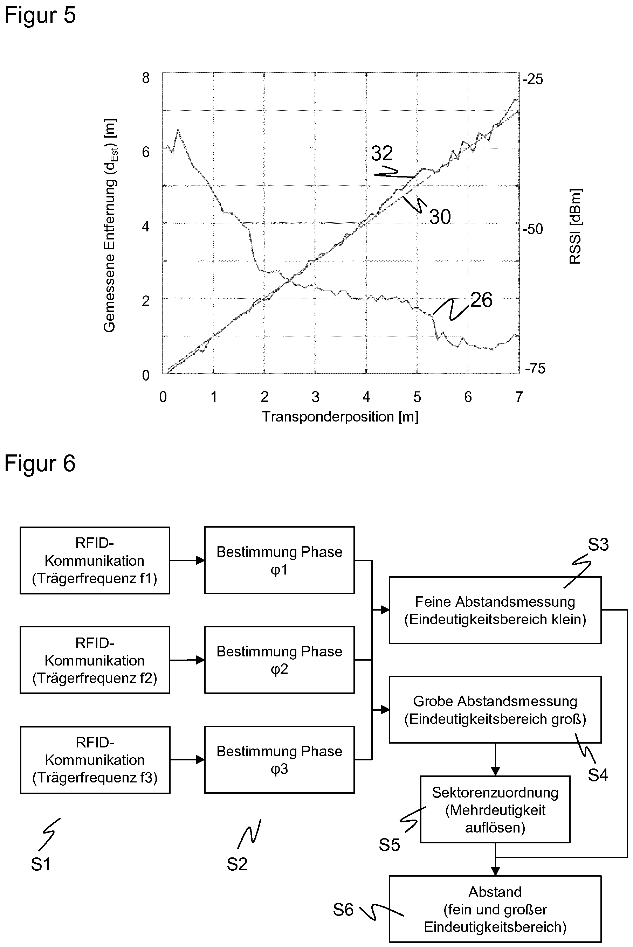

Figur 5 zeigt in einer der Figur 3 entsprechenden Darstellung das Ergebnis der kombinierten Abstandsmessungen. Die Messkurve 32 zeigt die mit der ersten feinen Abstandsmessung bestimmten Abstandswerte, die jeweils anhand des mit der zweiten groben Abstandsmessung bestimmten Sektors m=0, 1, 2 angepasst sind, in Abhängigkeit von der Transponderposition oder dem tatsächlichen Abstand. Wie der Vergleich mit dem theoretischen Verlauf der Geraden 30 zeigt, vereinigt die Messkurve 32 die hohe Messgenauigkeit der ersten feinen Abstandsmessung mit dem großen Eindeutigkeitsbereich der zweiten groben Abstandsmessung, der nun ausreichend groß ist, um die maximale Lesereichweite von beispielsweise 10 m abzudecken.

Figur 6 zeigt abschließend ein beispielhaftes Ablaufschema der kombinierten Abstandsmessung. In einem Schritt S1 kommuniziert die RFID-Lesevorrichtung 10 in beliebiger Reihenfolge mehrfach bei den drei Frequenzen f1, f2 und f3 mit dem RFID-Transponder 12. Die Wahl der Frequenzen f1, f2, f3 erfolgt vorzugsweise nach den erläuterten Kriterien, insbesondere angepasst an die ETSI-Norm.

In einem Schritt S2 werden die zu den Frequenzen f1, f2, f3 gehörigen Phasen $\varphi1$, $\varphi2$, $\varphi3$ ermittelt. Das geschieht vorzugsweise direkt im Zusammenhang mit der Messung bei der jeweiligen Frequenz, aber grundsätzlich ist die Reihenfolge der Kommunikationsvorgänge und Auswertungen nicht festgelegt, sofern die notwendigen Signale und Daten zwischengespeichert sind.

In einem Schritt S3 folgt die erste feine Abstandsmessung und in einem Schritt S4 die zweite grobe Abstandsmessung vorzugsweise in einem Zweifrequenzverfahren. Erneut können diese Auswertungen in umgekehrter Reihenfolge oder sogar parallel zueinander erfolgen, sogar parallel zu einem Teil der Kommunikationsvorgänge und Phasenbestimmungen in Schritt S1 und S2, natürlich erst nachdem die jeweils benötigen der Phasen $\varphi1$, $\varphi2$, $\varphi3$ bestimmt sind. Beispielsweise verwendet die erste feine Abstandsmessung die Frequenzen f1, f2 und die Phasen $\varphi1$, $\varphi2$ und die zweite grobe Abstandsmessung die Frequenzen f1, f3 mit den Phasen $\varphi1$, $\varphi3$ oder die Frequenzen f2, f3 mit den Phasen $\varphi2$, $\varphi3$. Vorteilhafte Zuordnungen für ein Zweifrequenzverfahren unter den Randbedingungen der ETSI-Norm wurden oben beschrieben.

In einem Schritt S5 wird das Ergebnis der zweiten groben Abstandsmessung genutzt, um die Mehrdeutigkeit der ersten feinen Abstandsmessung aufzulösen, insbesondere die ganzzahlige Periode oder den richtigen Sektor m=0, 1, 2, ... zu bestimmen. Optional kann ergänzend der Pegel (RSSI) mit herangezogen werden, um den Sektor zu bestimmen oder zu plausibilisieren.

In einem Schritt S6 liegt dann ein Abstandswert vor, dessen Genauigkeit der ersten feinen Abstandsmessung entspricht, dies jedoch über dem großen Eindeutigkeitsbereich der zweiten groben Abstandsmessung, so wie dies für ein Beispiel in Figur 5 illustriert ist.

Die erfindungsgemäße Abstandsmessung ist an die zwei in sich engen und durch Kanäle begrenzten, separate Frequenzbänder der ETSI-Norm EN302208 V3.1.1 (2016-11) angepasst und in diesem Zusammenhang besonders vorteilhaft. Dennoch kann die Abstandsmessung auch in UHF-RFID-Anwendungen mit FCC-Zulassung eingesetzt werden, sofern die Differenzfrequenz f2-f1 ausreichend groß und die Differenzfrequenz f3-f1 beziehungsweise f3-f2 ausreichend klein gewählt wird. Nach FCC Part 15 rules, section 15.247 ist der Bereich 902-928 MHz für RFID-Anwendungen spezifiziert. In diesem Frequenzbereich stehen fünfzig unterschiedliche Sendekanäle zur Verfügung, so dass ein größerer Freiheitsgrad in der Frequenzauswahl besteht.

**Patentansprüche**

1. RFID-Lesevorrichtung (10) mit mindestens einer Antenne (20) zum Kommunizieren mit einem RFID-Transponder (12) über ein RFID-Signal und mit einer Steuer- und Auswertungseinheit (22), die dafür ausgebildet ist, eine RFID-Information in das RFID-Signal einzucodieren und/oder aus dem RFID-Signal auszulesen sowie mittels des RFID-Signals mit einem Phasenverfahren einen Abstand des RFID-Transponders (12) zu bestimmen,
   **dadurch gekennzeichnet,**
   **dass** die Steuer- und Auswertungseinheit (22) weiterhin dafür ausgebildet ist, mehrere Kommunikationsvorgänge mit dem RFID-Transponder (12) bei jeweils verschiedenen Frequenzen (f1, f2, f3) durchzuführen, mit einer ersten feinen Abstandsmessung den Abstand noch mehrdeutig und mit einer zweiten groben Abstandsmessung eindeutig zu bestimmen und die Mehrdeutigkeit der ersten feinen Abstandsmessung mit der zweiten groben Abstandsmessung aufzulösen.

2. RFID-Lesevorrichtung (10) nach Anspruch 1, wobei die Steuer- und Auswertungseinheit (22) dafür ausgebildet ist, mit der zweiten groben Abstandsmessung ein als Sektor (m) bezeichnetes Abstandsintervall für den Abstand des RFID-Transponders (12) aufzufinden.

3. RFID-Lesevorrichtung (10) nach Anspruch 1 oder 2 wobei die Steuer- und Auswertungseinheit (22) dafür ausgebildet ist, für die Kommunikationsvorgänge zur Bestimmung eines Abstands eine erste Frequenz (f1), eine zweiten Frequenz (f2) und eine dritten Frequenz (f3) zu verwenden.

4. RFID-Lesevorrichtung (10) nach einem der vorhergehenden Ansprüche, wobei die Steuer- und Auswertungseinheit (22) dafür ausgebildet ist, die erste feine Abstandsmessung und/oder die zweite grobe Abstandsmessung mit einem Zweifrequenzverfahren auszuwerten, bei dem insbesondere der jeweilige Abstandswert mit einem Quotienten aus Differenzphase und einer Differenzfrequenz aus zwei der Kommunikationsvorgänge bestimmt wird.

5. RFID-Lesevorrichtung (10) nach einem der vorhergehenden Ansprüche,
wobei die Steuer- und Auswertungseinheit (22) dafür ausgebildet ist, für die mehreren Kommunikationsvorgänge Frequenzen (f1, f2, f3) aus einem ersten Frequenzband und einem zweiten Frequenzband zu verwenden, wobei die Frequenzbänder einen gegenseitigen Frequenzabstand aufweisen.

6. RFID-Lesevorrichtung (10) nach Anspruch 5,
wobei das erste Frequenzband das Frequenzband von 865-868 MHz und das zweite Frequenzband das Frequenzband von 915-921 MHz ist.

7. RFID-Lesevorrichtung (10) nach Anspruch 5 oder 6,
wobei die Steuer- und Auswertungseinheit (22) dafür ausgebildet ist, für die Bestimmung eines Abstands einen ersten Kommunikationsvorgang mit einer ersten Frequenz (f1) aus dem einen Frequenzband und einen zweiten Kommunikationsvorgang mit einer zweiten Frequenz (f2) aus dem anderen Frequenzband durchzuführen.

8. RFID-Lesevorrichtung (10) nach Anspruch 7,
wobei die Steuer- und Auswertungseinheit (22) dafür ausgebildet ist, für die Bestimmung eines Abstands einen dritten Kommunikationsvorgang mit einer dritten Frequenz (f3) aus dem ersten Frequenzband oder dem zweiten Frequenzband durchzuführen.

9. RFID-Lesevorrichtung (10) nach Anspruch 8,
wobei die Steuer- und Auswertungseinheit (22) dafür ausgebildet ist, die erste feine Abstandsmessung mit einem Zweifrequenzverfahren aus dem Kommunikationsvorgang mit der ersten Frequenz (f1) und dem Kommunikationsvorgang mit der zweiten Frequenz (f2) und die zweite grobe Abstandsmessung mit einem Zweifrequenzverfahren aus dem Kommunikationsvorgang mit der dritten Frequenz (f3) und dem Kommunikationsvorgang mit der ersten Frequenz (f1) oder der zweiten Frequenz (f2) auszuwerten.

10. RFID-Lesevorrichtung (10) nach Anspruch 9,
wobei die Steuer- und Auswertungseinheit (22) dafür ausgebildet ist, für das Zweifrequenzverfahren der zweiten groben Abstandsmessung die erste Frequenz (f1) heranzuziehen, wenn die dritte Frequenz (f3) im ersten Frequenzband liegt, und die zweite Frequenz (f2) heranzuziehen, wenn die dritte Frequenz (f2) im zweiten Frequenzband liegt.

11. RFID-Lesevorrichtung (10) nach einem der vorhergehenden Ansprüche,
wobei die Steuer- und Auswertungseinheit (22) dafür ausgebildet ist, den Abstand auch aus einem Pegel des RFID-Signals zu schätzen und diese Abstandsschätzung ergänzend zu verwenden, um die Mehrdeutigkeit der ersten feinen Abstandsmessung aufzulösen.

12. RFID-Lesevorrichtung (10) nach einem der vorhergehenden Ansprüche,
die für eine Kommunikationsreichweite von mindestens fünf Metern oder mindestens zehn Metern ausgebildet ist.

13. Verfahren zum Kommunizieren zwischen einer RFID-Lesevorrichtung (10), insbesondere einer RFID-Lesevorrichtung (10) nach einem der vorhergehenden Ansprüche, und einem RFID-Transponder (12) über ein RFID-Signal, wobei eine RFID-Information in das RFID-Signal eincodiert und/oder aus dem RFID-Signal ausgelesen sowie mittels des RFID-Signals mit einem Phasenverfahren ein Abstand des RFID-Transponders (12) bestimmt wird,
**dadurch gekennzeichnet,**
**dass** mehrere Kommunikationsvorgänge mit dem RFID-Transponder (12) bei jeweils verschiedenen Frequenzen (f1, f2, f3) durchgeführt werden, dass mit einer ersten feinen Abstandsmessung der Abstand noch mehrdeutig und mit einer zweiten groben Abstandsmessung eindeutig bestimmt wird und dass die Mehrdeutigkeit der ersten feinen Abstandsmessung mit der zweiten groben Abstandsmessung aufgelöst wird.

Figur 1

Figur 2

## Figur 3

## Figur 4

## Figur 5

## Figur 6

**Europäisches Patentamt**
**European Patent Office**
**Office européen des brevets**

# EUROPÄISCHER RECHERCHENBERICHT

Nummer der Anmeldung

EP 19 18 6194

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (IPC) |
|---|---|---|---|
| X,D | US 8 188 908 B2 (LANDT JEREMY A [US]; AMTECH SYSTEMS LLC [US]) 29. Mai 2012 (2012-05-29) * Spalte 24, Zeile 62 - Spalte 25, Zeile 21 * ----- | 1-13 | INV. G06K7/10 G01S1/08 |
| X | EP 2 648 131 A1 (SIEMENS AG [DE]) 9. Oktober 2013 (2013-10-09) * Absätze [0049], [0050]; Abbildung 7 * ----- | 1,13 | |
| X | US 2004/260506 A1 (JONES ALED WYNNE [GB] ET AL) 23. Dezember 2004 (2004-12-23) * Absatz [0104]; Abbildung 16 * ----- | 1,13 | |

**RECHERCHIERTE SACHGEBIETE (IPC)**

G06K
G01S

Der vorliegende Recherchenbericht wurde für alle Patentansprüche erstellt

| Recherchenort | Abschlußdatum der Recherche | Prüfer |
|---|---|---|
| München | 14. Januar 2020 | Fichter, Uli |

EPO FORM 1503 03.82 (P04C03)

**ANHANG ZUM EUROPÄISCHEN RECHERCHENBERICHT
ÜBER DIE EUROPÄISCHE PATENTANMELDUNG NR.**

EP 19 18 6194

In diesem Anhang sind die Mitglieder der Patentfamilien der im obengenannten europäischen Recherchenbericht angeführten Patentdokumente angegeben.
Die Angaben über die Familienmitglieder entsprechen dem Stand der Datei des Europäischen Patentamts am
Diese Angaben dienen nur zur Unterrichtung und erfolgen ohne Gewähr.

14-01-2020

| Im Recherchenbericht angeführtes Patentdokument | Datum der Veröffentlichung | Mitglied(er) der Patentfamilie | Datum der Veröffentlichung |
|---|---|---|---|
| US 8188908 B2 | 29-05-2012 | KEINE | |
| EP 2648131 A1 | 09-10-2013 | CN 103329142 A<br>EP 2648131 A1<br>US 2014022059 A1<br>WO 2012094825 A1 | 25-09-2013<br>09-10-2013<br>23-01-2014<br>19-07-2012 |
| US 2004260506 A1 | 23-12-2004 | KEINE | |

EPO FORM P0461

Für nähere Einzelheiten zu diesem Anhang : siehe Amtsblatt des Europäischen Patentamts, Nr.12/82

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- US 8188908 B3
- US 20140184447 A1
- US 9116237 B2
- US 8493182 B2

**In der Beschreibung aufgeführte Nicht-Patentliteratur**

- ETSI-Zulassung, die also die Norm EN302208 V3.1.1. ETSI (European Telecommunications Standards Institute), November 2016
- Multifrequency-based range estimation of RFID tags. **XIN LI et al.** 2009 IEEE International Conference on RFID. IEEE, 2009
- *ETSI in der Norm EN302208 V3.1.1,* November 2016
- *ETSI-Norm EN302208 V3.1.1,* November 2016